# EUROPEAN PATENT APPLICATION

(11) **EP 3 067 242 A1**
(43) Date of publication of application: **14.09.2016**
(21) Application number: 15158334.1
(22) Date of filing: 10.03.2015
(51) Int. Cl.: B60T 7/04

(54) **BUMPER FOR A BRAKE PEDAL**

(71) Applicant: BASF SE, 67056 Ludwigshafen am Rhein (DE)
(72) Inventor: The designation of the inventor has not yet been filed
(74) Representative: BASF IP Association

(57) **Abstract**

A bumper for mounting within a passenger compartment of a vehicle adjacent a brake pedal. The brake pedal is coupled to the vehicle and movable along a path between an initial position and a braking position such that the brake pedal contacts and compresses the bumper as the brake pedal moves from the initial position toward the braking position along the path. The vehicle includes an electronic braking system in communication with the brake pedal and configured to brake the vehicle in response to movement of the brake pedal from the initial position along the path. The bumper has a stiffness with the stiffness of the bumper increases as the bumper is compressed by the brake pedal moving from the initial position toward the braking position.

## Description

### BACKGROUND OF THE INVENTION

### 1. Field of the Invention

The subject invention relates to a bumper for a brake pedal of a vehicle.

### 2. Description of the Related Art

Conventional automotive vehicles typically include a mechanical brake pedal that is continuously connected to a brake lever. The motion of the lever in turn actuates a braking mechanism, such as disc and/or drum brakes, to slow or stop the vehicle. Typically, the braking mechanism can be described as a hydraulic braking system. The hydraulic braking system is powered by a supply of pressurized brake fluid from a master cylinder in response to force applied to the brake lever through a range of motion of the brake lever, providing a brake pedal feel. For example, as pressure within the hydraulic braking system increases, the brake lever becomes stiffer, i.e., further travel of the brake lever is resisted.

By contrast, an electronic or by-wire braking system is often used in electric vehicles or in hybrid vehicles. In an electronic braking system (EBS), movement of the brake lever is communicated to a brake computer, which controls the disc and or drum brakes of the vehicle to slow or stop the vehicle. Because the brake lever is not directly connected to the hydraulic braking system, movement of the brake lever is not resisted as a direct result of increased pressure of the brake fluid. As such, the brake lever completely lacks any brake pedal feel, which can make it difficult for a driver to determine the amount of braking force being applied to stop the vehicle.

The EBS may include a brake lever resistor in communication with the brake computer for providing brake pedal feel corresponding with the amount of brake force being applied. However, the inclusion of the brake lever resistor is costly and complicated requiring additional computer software and programming to control the amount of force the brake lever resistor applies to the brake lever based on the braking force being applied. Therefore, there remains a need to simplify an EBS to control the travel of the brake lever based on the brake force being applied.

### SUMMARY OF THE INVENTION AND ADVANTAGES

A bumper for mounting within a passenger compartment of a vehicle adjacent a brake pedal. The brake pedal is coupled to the vehicle and movable along a path between an initial position and a braking position such that the brake pedal contacts and compresses the bumper as the brake pedal moves from the initial position toward the braking position along the path. The vehicle includes an electronic braking system in communication with the brake pedal and configured to brake the vehicle in response to movement of the brake pedal from the initial position along the path. The bumper has a stiffness with the stiffness of the bumper increases as the bumper is compressed by the brake pedal moving from the initial position toward the braking position.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a front view of a passenger compartment of a vehicle showing a brake pedal;
Figure 2 is a front view of the passenger compartment showing a bumper coupled to a bulkhead of the vehicle;
Figure 3 is a perspective view of the bumper;
Figure 4 is a cross-sectional view of the bumper;
Figure 5 is a cross-sectional view of a tube surrounding the bumper with a striker spaced from the bumper;
Figure 6 is a cross-sectional view of the tube with the striker compressing the bumper;
Figure 7 is a cross-sectional view of the tube with the striker spaced from the bumper and coupled to a guide rod, which extends through the bumper; and
Figure 8 is a cross-sectional view of the tube with the striker compressing the bumper with the guide rod extending through the bumper.

### DETAILED DESCRIPTION

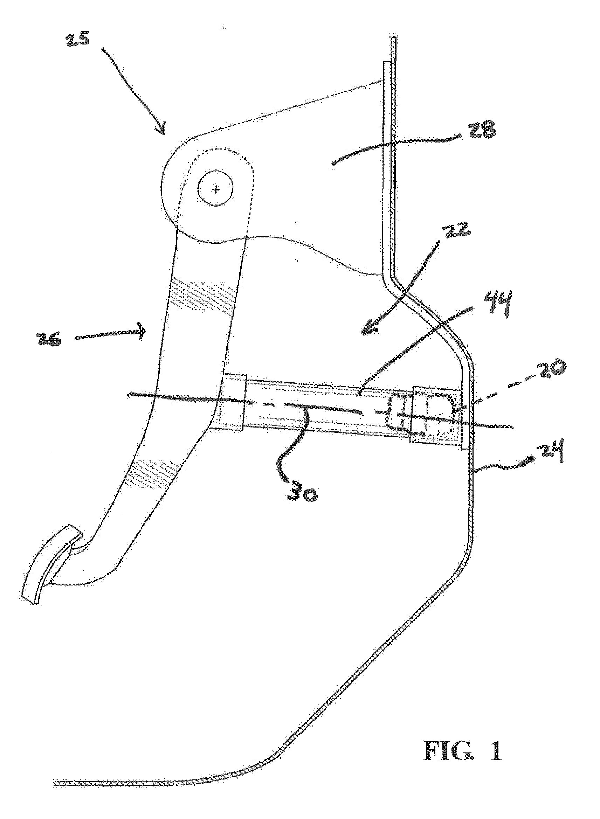

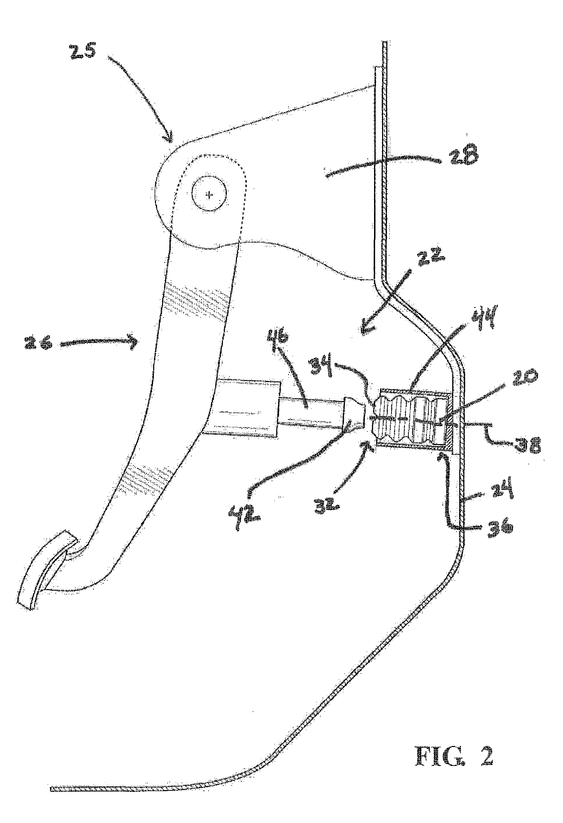

Referring to the Figures, wherein like numerals indicate like or corresponding parts throughout the several views, a bumper 20 for mounting within a passenger compartment 22 of a vehicle (not shown) is generally shown in Figures 1 and 2. The vehicle comprises a bulkhead 24 defining a portion of the passenger compartment 22. The bumper 20 is typically coupled to the bulkhead 24. It is to be appreciated that the bumper 20 may be directly or indirectly connected to the bulkhead 24.

The vehicle includes a brake pedal assembly 25 configured to be mounted within the passenger compartment 22. The brake pedal assembly 25 includes a brake pedal 26 configured to be mounted within the passenger compartment 22. Generally, the brake pedal 26 is coupled to the vehicle. More specifically, the brake pedal 26 is pivotally mounted to a base member 28, which is coupled to the bulkhead 24. The brake pedal 26 is actuated by a driver to engage a braking system, such as an electronic braking system, to stop the vehicle. More specifically, the electronic braking system is in communication with the brake pedal 26 and configured to brake the vehicle in response to movement of the brake pedal 26. The brake pedal 26 is movable along a path 30 between an initial position and a braking position. As the brake pedal 26 moves along the path 30 from the initial position to the braking position, a signal is sent to the electronic braking system to engage the brakes of the vehicle. Generally, as the brake pedal 26 progresses along the path 30, the amount of force being applied by the braking system is increases.

The bumper 20 is configured to be mounted within the passenger compartment 22 adjacent the brake pedal 26. The bumper 20 is in alignment with the path 30 such that the brake pedal 26 contacts and compresses the bumper 20 as the brake pedal 26 moves from the initial position toward the braking position along the path 30. More specifically, the bumper 20 has a first end 32 having a contact surface 34 configured to engage the brake pedal 26 and a second end 36 spaced from the first end 32 with a longitudinal axis 38 defined between the first end 32 and the second end 36. The second end 36 of the bumper 20 is typically coupled to the bulkhead 24 of the vehicle for preventing movement of the bumper 20. As such, the bumper 20 extends from the bulkhead 24 and terminates at the first end 32.

The bumper 20 has a stiffness. Generally, the stiffness of the bumper 20 increases as the bumper 20 is compressed by the brake pedal 26. More specifically, the stiffness of the bumper 20 increases as the bumper 20 is compressed by the brake pedal 26 moving from the initial position toward the braking position. The increases stiffness of the bumper 20 mimics the feel of pressure increasing within a hydraulic braking systems. As such, the bumper 20 allows the driver of the vehicle equipped with the electronic braking system to experience increased resistance to the brake pedal 26 moving along the path 30 in a similar manner as non-electronic braking systems when the resistance of the pedal has a direct correlation with the braking force being applied.

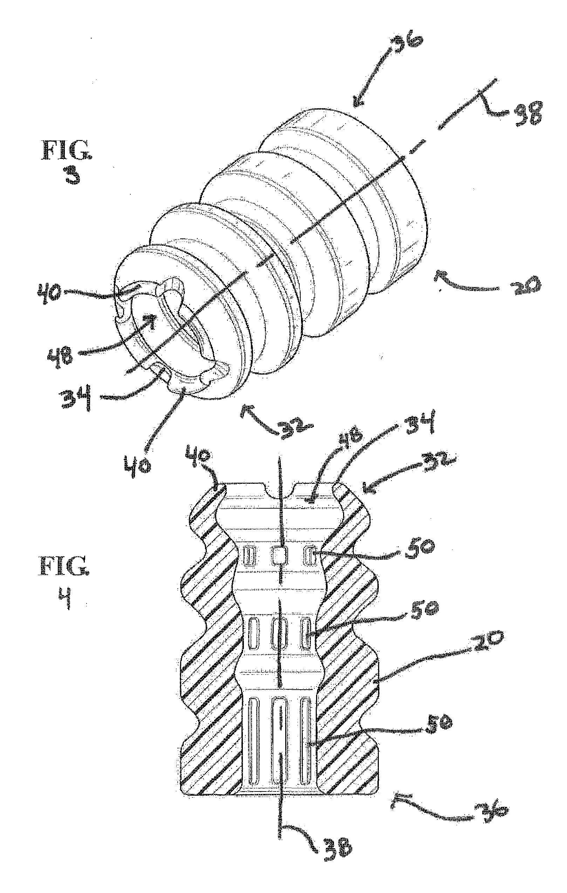

As best shown in Figure 3, generally, bumper 20 has a perimeter presenting a circular configuration. However, it is to be appreciated that the bumper 20 may have any suitable configuration.

Referring to Figures 3 and 4, the bumper 20 may include at least one rib 40 extending from the contact surface 34. Said differently, the contact surface 34 of the bumper 20 may have at least one rib 40 extending therefrom. The rib 40 may have a stiffness different than the stiffness of the bumper 20. For example, the stiffness of the rib 40 may be less than the stiffness of the bumper 20. In such an embodiment, the rib 40 is configured to provide an initial cushioning of the brake pedal 26 as the brake pedal 26 contacts the bumper 20. Said differently, the reduced stiffness of the rib 40 relative to the stiffness of the bumper 20 allows for a soft entry of the brake pedal 26 into the bumper 20 thereby reducing the force required to begin to compress the bumper 20 with the brake pedal 26.

It is to be appreciated that the increased stiffness of the bumper 20 as it is compressed can be accomplished in a variety of ways. For example, a cross-sectional thickness of the bumper 20 may increase along the longitudinal axis 38 from the first end 32 to the second end 36 of the bumper 20. Increasing the cross-sectional area results in an increase of the stiffness of the bumper 20 along the longitudinal axis 38. Alternatively, the bumper 20 may comprises at least two segments with each segment comprising a different material. In such an embodiment, a stiffness of the material of the segments would differ for providing and/or varying the stiffness of the bumper 20 along the longitudinal axis 38. However, it is to be appreciated that the bumper 20 may be formed from a single material.

Generally, the material of the bumper 20 is resilient, i.e., material that is able to spring back to shape after being compressed. For example, the material of the bumper 20 is typically selected from the group of rubber, microcellular polyurethane, and combinations thereof. Additionally, the material of the bumper 20 may be MH24 and MHKG. In one embodiment, the bumper 20 comprises microcellular polyurethane, also referred to as microcellular urethane. Generally, microcellular polyurethane has a microcellular structure, i.e., the microcellular polyurethane presents cell walls defining cells, or void space. The cell walls have an original shape and the cells are generally filled with air. When the microcellular polyurethane is subjected to compressive forces, the cell walls are collapsed and pressure builds within the cells as they collapse and/or air evacuates from the cells. When the compressive forces are removed, the cell walls return to the original shape. The use of microcellular polyurethane in compression application is beneficial because the microcellular polyurethane has a progressive load deflection curve. The progressive load deflection curve of microcellular polyurethane is similar to a traditional load deflection curve of a brake pedal 26 in non-electronic braking systems.

An example of a suitable microcellular polyurethane for this application is the type manufactured by BASF Corporation under the tradename Cellasto^{®}. For example, Cellasto MH24 and Cellasto MHKG. The microcellular polyurethane is formed from a two-step process. In the first step of the process, an isocyanate prepolymer is formed by reacting a polyol and an isocyanate. The polyol is polyester, and alternatively is polyether. The isocyanate is monomeric methyldiphenyl diisocyanate, and alternatively is naphthalene diisocyanate. However, it should be appreciated that the isocyanate can be of any type without departing from the nature of the present invention. In the second step of the process, the isocyanate prepolymer reacts with water to generate carbon dioxide and the carbon dioxide forms the cells of the microcellular polyurethane.

For example, polyester polyols are produced from the reaction of a dicarboxylic acid and a glycol having at least one primary hydroxyl group. For example, dicarboxylic acids that are suitable for producing the polyester polyols are selected from the group of, but are not limited to, adipic acid, methyl adipic acid, succinic acid, suberic acid, sebacic acid, oxalic acid, glutaric acid, pimelic acid, azelaic acid, phthalic acid, terephthalic acid, isophthalic acid, and combinations thereof. For example, glycols that are suitable for producing the polyester polyols are selected from the group of, but are not limited to, ethylene glycol, butylene glycol, hexanediol, bis(hydroxymethylcyclohexane), 1,4-butanediol, diethylene glycol, 2,2-dimethyl propylene glycol, 1,3-propylene glycol, and combinations thereof. The polyester polyol has a hydroxyl number of from 30 to 130, a nominal functionality of from 1.9 to 2.3, and a nominal molecular weight of from 1000 to 3000. Specific examples of polyester polyols suitable for the subject invention include Pluracol® Series commercially available from BASF Corporation of Florham Park, NJ.

For example, polyether polyols are produced from the cyclic ether propylene oxide, and alternatively ethylene oxide or tetrahydrofuran. Propylene oxide is added to an initiator in the presence of a catalyst to produce the polyester polyol. Polyether polyols are selected from the group of, but are not limited to, polytetramethylene glycol, polyethylene glycol, polypropylene glycol, and combinations thereof. The polyether polyol has a hydroxyl number of from 30 to 130, a nominal functionality of from 1.8 to 2.3, and a nominal molecular weight of from 1000 to 5000. Specific examples of polyether polyols suitable for the subject invention include Pluracol® 858, Pluracol® 538, Pluracol® 220, Pluracol® TP Series, Pluracol® GP Series, and Pluracol® P Series commercially available from BASF Corporation of Florham Park, NJ.

For example, diisocyanates are selected from the group of, but are not limited to, 4,4'-diphenylmethane diisocyanate, 2,4'-diphenylmethane diisocyanate, ethylene diisocyanate, ethylidene diisocyanate, propylene diisocyanate, butylene diisocyanate, cyclopentylene-1,3-diisocyanate, cyclohexylene-1,4-diisocyanate, cyclohexylene-1,2-diisocyanate, 2,4-toluylene diisocyanate, 2,6-toluylene diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, tetramethylene diisocyanate, pentamethylene diisocyanate, hexamethylene diisocyanate, 1-chlorobenzene-2,4-diisocyanate, furfurylidene diisocyanate, and combinations thereof. Specific examples of diisocyanates suitable for the subject invention include Lupranate® 5143, Lupranate® MM103, and Lupranate® R2500U commercially available from BASF Corporation of Florham Park, NJ.

The monomeric methyldiphenyl diisocyanate is selected from the group of 4,4'-diphenylmethane diisocyanate, 2,4'-diphenylmethane diisocyanate, and combinations thereof. Specific examples of monomeric methyldiphenyl diisocyanates suitable for the subject invention include Lupranate® M and Lupranate® MS commercially available from BASF Corporation of Florham Park, NJ. The monomeric methyldiphenyl diisocyante may also be modified with carbonimide. Specific examples of carbonimide-modified monomeric methyldiphenyl diisocyante include Lupranate® 5143 and Lupranate® MM103 commercially available from BASF Corporation of Florham Park, NJ.

With reference to Figures 2 and 5-8, the vehicle, and more specifically, the brake pedal assembly 25, and even more specifically, the brake pedal 26, may include a striker 42. The striker 42 may be coupled to the brake pedal 26 for contacting and compressing the bumper 20 as the brake pedal 26 moves from the initial position toward the braking position along the path 30. In such an embodiment, the striker 42 extends from the brake pedal 26 towards the bumper 20. It is to be appreciated that the striker 42 may be spaced from the bumper 20 when the brake pedal 26 is in the initial position, as shown in Figure 2. Alternatively, the striker 42 may be in contact with the bumper 20 when the brake pedal 26 is in the initial position.

The vehicle, and more specifically, the brake pedal assembly 25, and even more specifically, the brake pedal 26 may include a tube 44. The tube 44 may be provided for housing at least a portion of the bumper 20. More specifically, when present, the tube 44 has a hollow interior with the tube 44 configured to be mounted within the passenger compartment 22 adjacent the brake pedal 26. The bumper 20 may be disposed within the hollow interior of the tube 44. When the bumper 20 is disposed within the tube 44, it is to be appreciated that the bumper 20 may be fully or partially disposed within the tube 44. For example, a portion of the bumper 20 may extend from the tube 44, as shown in Figure 2. In such an embodiment, the portion of the bumper 20 extending from the tube 44 may include the first end 32 or the second end 36 of the bumper 20.

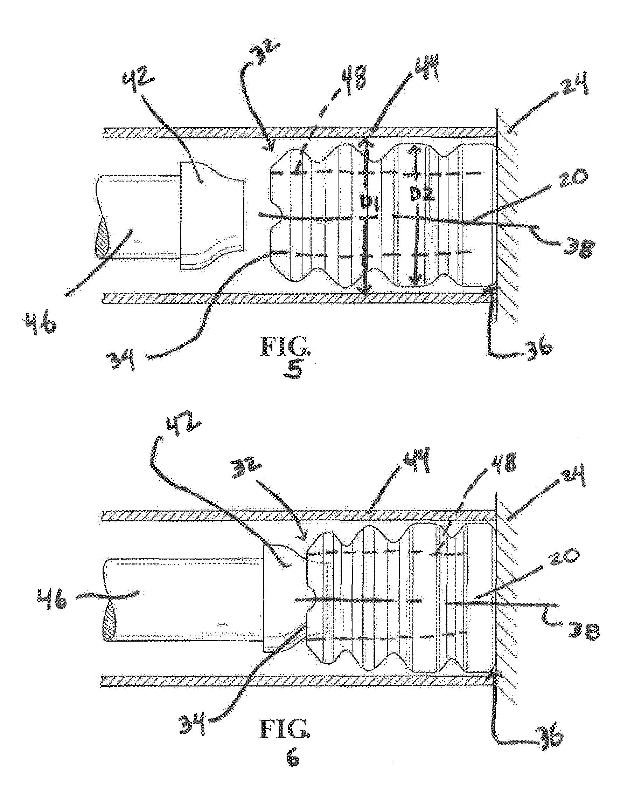

As best shown in Figures 5-8, the tube 44 has an interior diameter D1 and the bumper 20 has an outer diameter D2 less than the interior diameter D1 of tube 44 for allowing the bumper 20 to be disposed within the hollow interior of the tube 44. The bumper 20 has an outer surface, which defines the perimeter of the bumper 20. The outer surface may be configured to contact the tube 44 for preventing radial expansion of the bumper 20 beyond the interior diameter D1 of said tube 44. It is to be appreciated that the stiffness of the bumper 20 can be modified by limiting the radial expansion of the bumper 20 as it is compressed. Therefore, the interior diameter D1 of the tube 44 may vary along the longitudinal axis 38 for varying the stiffness of the bumper 20 along the longitudinal axis 38 as described above.

Typically, the tube 44 comprises a thermoplastic material. Typically, the thermoplastic material is selected from the group of thermoplastic elastomers and thermoset elastomers such as urethanes or rubbers. An example of suitable thermoplastic materials for the outer member 34 is Elastollan® available from BASF Corporation. However, it is to be appreciated that the tube 44 may comprise other suitable materials, such as aluminum and steel, such as hot or cold rolled steel.

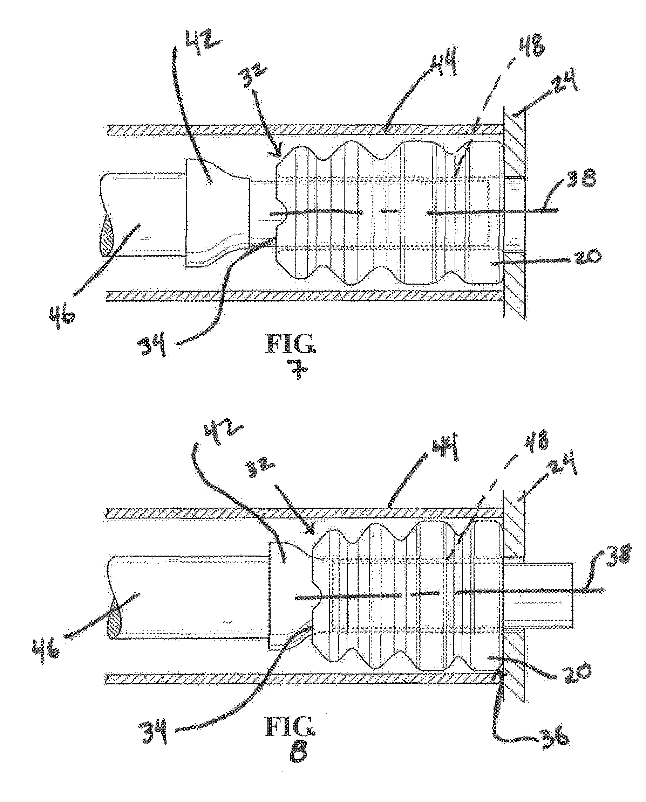

The vehicle, and more specifically, the brake pedal assembly 25, and even more specifically, the brake pedal 26 may include a guide rod 46. The guide rod 46 may be provided for interconnecting the brake pedal 26 and the bumper 20. When present, the guide rod 46 extends between the brake pedal 26 and the bumper 20. The bumper 20 may define a hole 48 extending axially though the bumper 20 along the longitudinal axis 38 for receiving the guide rod 46. As such, in one embodiment shown in Figures 7 and 8, the guide rod 46 extends into the hole 48 of the bumper 20 for maintaining alignment of the bumper 20 with the brake pedal 26.

With reference to Figure 4, the bumper 20 may define a plurality of pockets 50 within the hole 48 of the bumper 20 for allowing air to escape the hole 48 as the guide rod 46 moves through the hole 48. Likewise, the tube 44 may define a plurality of hole 48s for allowing air to escape the tube 44 as the bumper 20 is compressed.

It is to be appreciated that the striker 42 could also be used with the guide rod 46. For example, the striker 42 could be coupled to the guide rod 46 for contacting and compressing the bumper 20 as the brake pedal 26 moves from the initial position toward the braking position along the path 30.

The bumper 20 may include a reinforcing element contacting the perimeter of the bumper 20 for controlling radial expansion of the bumper 20. Said differently, the reinforcing element is designed to limit the radial expansion of the bumper 20 as the bumper 20 is compressed.

Obviously, many modifications and variations of the present invention are possible in light of the above teachings. The foregoing invention has been described in accordance with the relevant legal standards; thus, the description is exemplary rather than limiting in nature. Variations and modifications to the disclosed embodiment may become apparent to those skilled in the art and do come within the scope of the invention. Accordingly, the scope of legal protection afforded this invention may only be determined by studying the following claims.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A vehicle defining a passenger compartment and comprising:
a brake pedal coupled to said vehicle within the passenger compartment and movable along a path between an initial position and a braking position;
a electronic braking system in communication with said brake pedal and configured to brake said vehicle in response to movement of said brake pedal from said initial position along said path; and
a bumper configured to be mounted within the passenger compartment adjacent said brake pedal and in alignment with said path such that said brake pedal contacts and compresses said bumper as said brake pedal moves from said initial position toward said braking position along said path;
wherein a stiffness of said bumper increases as said bumper is compressed by said brake pedal moving from said initial position toward said braking position.

2. A vehicle as set forth in claim 1 further comprising a bulkhead defining a portion of the passenger compartment with bumper coupled to said bulkhead.

3. A vehicle as set forth in claim 1 further comprising a striker coupled to said brake pedal for contacting and compressing said bumper as said brake pedal moves from said initial position toward said braking position along said path.

4. A vehicle as set forth in claim 1 further comprising a tube having a hollow interior with said tube configured to be mounted within the passenger compartment adjacent said brake pedal and with said bumper disposed within said hollow interior of said tube.

5. A vehicle as set forth in claim 4 wherein said tube comprises a thermoplastic material.

6. A vehicle as set forth in claim 4 wherein said tube has an interior diameter and said bumper has an outer diameter less than said interior diameter of tube.

7. A vehicle as set forth in claim 6 wherein said bumper has an outer surface with said outer surface configured to contact said tube for preventing radial expansion of said bumper beyond said interior diameter of said tube.

8. A vehicle as set forth in claim 1 further comprising a guide rod extending between said brake pedal and said bumper and said bumper defines a hole extending axially though said bumper with said guide rod extending into said hole of said bumper for maintaining alignment of said bumper with said brake pedal.

9. A vehicle as set forth in claim 8 further comprising a striker coupled to said guide rod for contacting and compressing said bumper as said brake pedal moves from said initial position toward said braking position along said path.

10. A vehicle as set forth in claim 9 wherein said bumper defines a plurality of pockets within said hole for allowing air to escape said hole as said guide rod moved through said hole.

11. A vehicle as set forth in claim 1 wherein said bumper has a first end having a contact surface configured to engage said brake pedal and a second end spaced from said first end with a longitudinal axis defined between said first and said second end.

12. A vehicle as set forth in claim 11 wherein said contact surface has at least one rib extending therefrom with said rib having a stiffness less than said stiffness of said bumper with said rib configured to provide an initial cushioning of said brake pedal as said brake pedal contacts said bumper.

13. A vehicle as set forth in claim 12 wherein said bumper has a cross-sectional thickness with said cross-sectional thickness increasing along said longitudinal axis from said first end to said second end of said bumper for increasing said stiffness of said bumper along said longitudinal axis.

14. A vehicle as set forth in claim 1 wherein said bumper comprises a microcellular polyurethane.

15. A brake pedal assembly for positioning within a passenger compartment of a vehicle, said brake pedal assembly comprising:
a brake pedal configured to be mounted within the passenger compartment, with said brake pedal movable along a path between an initial position and a braking position;
a electronic braking system in communication with said brake pedal and configured to brake the vehicle in response to movement of said brake pedal from said initial position along said path; and
a bumper configured to be mounted within the passenger compartment adjacent said brake pedal and in alignment with said path such that said brake pedal contacts and compresses said bumper as said brake pedal moves from said initial position toward said braking position along said path;
wherein a stiffness of said bumper increases as said bumper is compressed by said brake pedal moving from said initial position toward said braking position.

16. A brake pedal assembly as set forth in claim 15 further comprising a striker coupled to said brake pedal for contacting and compressing said bumper as said brake pedal moves from said initial position toward said braking position along said path.

17. A brake pedal assembly as set forth in claim 15 further comprising a tube having a hollow interior with said tube configured to be mounted within the passenger compartment adjacent said brake pedal and with said bumper disposed within said hollow interior of said tube.

18. A brake pedal assembly as set forth in claim 17 wherein said tube comprises a thermoplastic material.

19. A brake pedal assembly as set forth in claim 17 wherein said tube has an interior diameter and said bumper has an outer diameter less than said interior diameter of tube.

20. A brake pedal assembly as set forth in claim 19 wherein said bumper has an outer surface with said outer surface configured to contact said tube for preventing radial expansion of said bumper beyond said interior diameter of said tube.

21. A brake pedal assembly as set forth in claim 15 further comprising a guide rod extending between said brake pedal and said bumper and said bumper defines a hole extending axially though said bumper with said guide rod extending into said hole of said bumper for maintaining alignment of said bumper with said brake pedal.

22. A brake pedal assembly as set forth in claim 21 further comprising a striker coupled to said guide rod for contacting and compressing said bumper as said brake pedal moves from said initial position toward said braking position along said path.

23. A brake pedal assembly as set forth in claim 22 wherein said bumper defines a plurality of pockets within said hole for allowing air to escape said hole as said guide rod moved through said hole.

24. A brake pedal assembly as set forth in claim 15 wherein said bumper has a first end having a contact surface configured to engage said brake pedal and a second end spaced from said first end with a longitudinal axis defined between said first and said second end.

25. A brake pedal assembly as set forth in claim 24 wherein said contact surface has at least one rib extending therefrom with said rib having a stiffness less than said stiffness of said bumper with said rib configured to provide an initial cushioning of said brake pedal as said brake pedal contacts said bumper.

26. A brake pedal assembly as set forth in claim 25 wherein said bumper has a cross-sectional thickness with said cross-sectional thickness increasing along said longitudinal axis from said first end to said second end of said bumper for increasing said stiffness of said bumper along said longitudinal axis.

27. A brake pedal assembly as set forth in claim 15 wherein said bumper comprises a microcellular polyurethane.

28. A bumper for mounting within a passenger compartment of a vehicle adjacent a brake pedal with the brake pedal coupled to the vehicle and movable along a path between an initial position and a braking position such that the brake pedal contacts and compresses said bumper as the brake pedal moves from the initial position toward the braking position along the path and with said vehicle including an electronic braking system in communication with the brake pedal and configured to brake the vehicle in response to movement of the brake pedal from the initial position along the path, wherein a stiffness of said bumper increases as said bumper is compressed by the brake pedal moving from the initial position toward the braking position.

29. A bumper as set forth in claim 28 further comprising a first end having contact surface configured to engage the brake pedal and a second end spaced from said first end with a longitudinal axis defined between said first end and said second end.

30. A bumper as set forth in claim 29 further comprising at least one rib extending from said contact surface and with said rib having a stiffness less than said stiffness of said bumper with said rib configured to provide an initial cushioning of the brake pedal as the brake pedal contacts said bumper.

31. A bumper as set forth in claim 29 having a cross-sectional thickness with said cross-sectional thickness increasing along said longitudinal axis from said first end to said second end of said bumper for increasing said stiffness of said bumper along said longitudinal axis.

32. A bumper as set forth in claim 28 wherein said bumper comprises a microcellular polyurethane.
